# EUROPEAN PATENT SPECIFICATION

(11) **EP 4 080 422 B1**
(45) Date of publication and mention of the grant of the patent: **28.01.2026**
(21) Application number: 22160893.8
(22) Date of filing: 08.03.2022
(51) Int. Cl.: G06N 20/20

(54) **NON-TRANSITORY COMPUTER READABLE MEDIUM, INFORMATION PROCESSING APPARATUS, AND METHOD OF GENERATING A LEARNING MODEL**
NICHTFLÜCHTIGES COMPUTERLESBARES MEDIUM, INFORMATIONSVERARBEITUNGSGERÄT UND VERFAHREN ZUR ERZEUGUNG EINES LERNMODELLS
SUPPORT LISIBLE PAR ORDINATEUR NON TRANSITOIRE, APPAREIL DE TRAITEMENT D'INFORMATIONS ET PROCÉDÉ DE GÉNÉRATION D'UN MODÈLE D'APPRENTISSAGE

(30) Priority: 29.03.2021 JP 2021055855
(43) Date of publication of application: 26.10.2022
(73) Proprietor: Yokogawa Electric Corporation, Musashino-shi, Tokyo 180-8750 (JP)
(72) Inventor: JINGUU, Yoshiyuki, Musashino-shi, Tokyo, 180-8750 (JP)
(74) Representative: Zimmermann, Tankred Klaus

(56) References cited:
- US-A1- 2020 380 309
- US-A1- 2020 380 310

## Description

### CROSS-REFERENCE TO RELATED APPLICATION

The present application claims priority to Japanese Patent Application No. 2021-055855 filed on March 29, 2021.

### TECHNICAL FIELD

The present disclosure relates to a non-transitory computer readable medium, an information processing apparatus, and a method of generating a learning model.

### BACKGROUND

Technology related to the generation of a learning model for classifying data by characterizing the data with one label among a plurality of labels is known. For example, patent literature (PTL) 1 discloses an information processing apparatus that includes training data input means for inputting training data pertaining to a classification target, learning means for performing machine learning based on the training data, and determination means for determining whether training data or information related to training data is insufficient during learning by the learning means. Such an information processing apparatus further includes notification means for providing notification of a message urging the addition of training data or information related to training data when it is determined that training data or information related to training data is insufficient.

### CITATION LIST

### Patent Literature

PTL 1: JP 2016-133895 A
The publication having the publication number US 2020/380309 A1 refers to the machine learning. Here, the issue of correcting data imbalance in a data set used in machine learning is addressed. Furthermore, the publication US 2020/380310 A1 is considered to be further prior art. The disclosure refers to a concept for improving performing data imbalance detection and correction in training a machine learning.

### SUMMARY

Conventional technology does not sufficiently consider the case in which, for example, in a training data set including a plurality of pieces of training data, the count of a first label that characterizes the greatest amount of the training data and the count of a second label that characterizes the smallest amount of the training data are imbalanced. Generating a learning model based on such imbalanced data will easily lead to overtraining.

It would be helpful to provide a non-transitory computer readable medium, an information processing apparatus, and a method of generating a learning model capable of suppressing overtraining and of generating a learning model with a high evaluation index, even when imbalanced data is used.

A program according to an embodiment is disclosed by claim 1

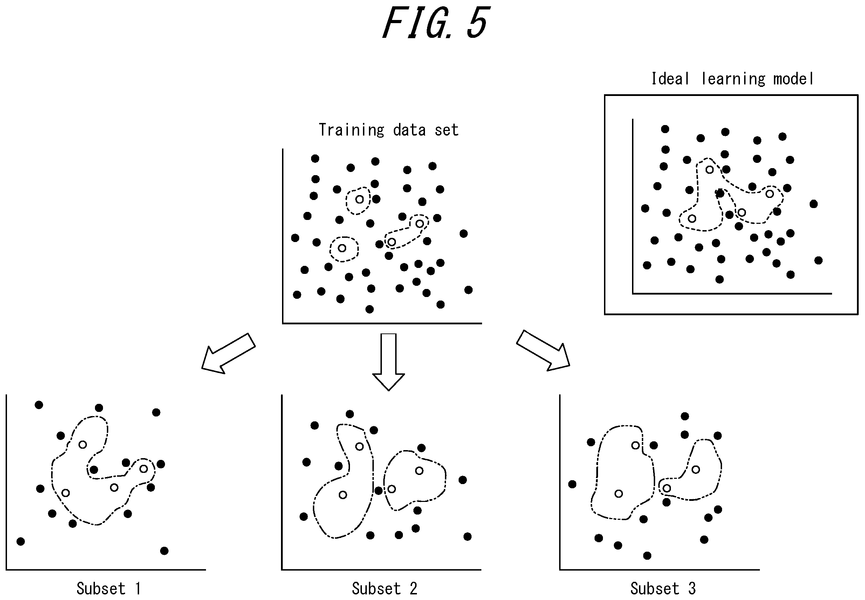

With this configuration, overtraining can be suppressed and a learning model with a high evaluation index can be generated, even when imbalanced data is used. For example, by dividing the training data set, which represents imbalanced data, into a plurality of subsets, the information processing apparatus can suppress overtraining as illustrated in FIG. 5 below.

By generating a plurality of first learning models based on each subset in a plurality of subsets in which a different combination of first training data is included in each subset, the information processing apparatus can suppress data bias, such as the bias with conventional undersampling. As a result, since a plurality of first learning models is generated based on the plurality of subsets with suppressed bias, a reduction in the evaluation index for such a first learning model set is suppressed.

By generating each subset based on the first training data and the second training data included in the original training data set, the information processing apparatus does not need to use modified data with uncertain accuracy, as in conventional oversampling, in a pseudo manner. As a result, since a plurality of first learning models is generated based on true training data characterized by predetermined labels, a reduction in the evaluation index for such a first learning model set is suppressed.

In addition, the information processing apparatus can store only the first learning model set with high accuracy by storing, in the storage, only the first learning model set for which the value of the first evaluation index is higher than the value of the second evaluation index. By using such a first learning model set, the information processing apparatus can determine, with high accuracy, labels for unknown data for judgment.

In an embodiment, the operations may include determining, before the generating of the plurality of subsets, a number of divisions when dividing the training data set into the plurality of subsets. This enables the information processing apparatus to appropriately perform the process of dividing imbalanced data into subsets based on the determined number of divisions. By determining the number of divisions, the information processing apparatus can acquire new training data and learn again, even if the degree of imbalance of the imbalanced data changes.

In an embodiment, the determining of the number of divisions may include determining the number of divisions based on information inputted by a user. This enables the information processing apparatus to divide the training data set into a number of subsets desired by the user. The convenience therefore increases for users of the information processing apparatus.

In an embodiment, the determining of the number of divisions may include determining the number of divisions automatically based on an initial setting. This enables the information processing apparatus to omit an input operation, by the user, for determining the number of divisions. The convenience therefore increases for users of the information processing apparatus.

In an embodiment, the operations may further include repeatedly updating the determined number of divisions to a different value within a predetermined range, calculating the first evaluation index based on each updated number of divisions, and determining the number of divisions to be the number of divisions for which the value of the first evaluation index is highest. This enables the information processing apparatus to store only the first learning model set with the highest accuracy among the plurality of first learning model sets that can be generated within a predetermined range. By using such a first learning model set, the information processing apparatus can determine, with high accuracy, labels for unknown data for judgment.

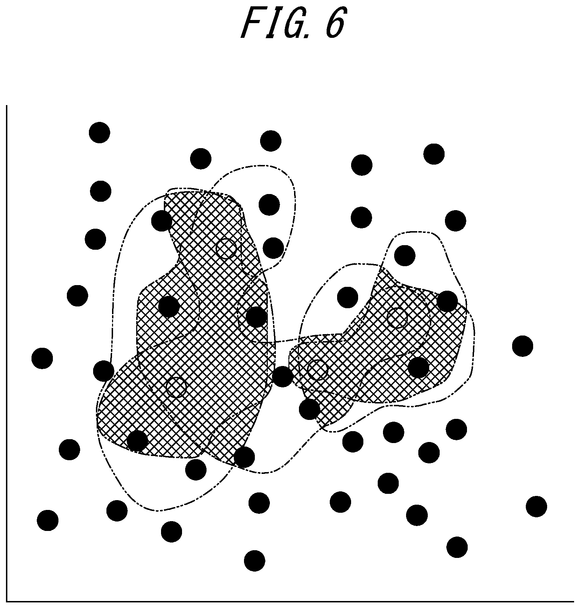

In an embodiment, the operations may further include integrating, by majority vote, predicted values resulting when validation data is inputted to each first learning model. As illustrated in FIGS. 5 and 6, this enables the information processing apparatus to form an abnormal determination area that is more ideal than the abnormal determination area based on the second learning model for when the plurality of subsets is not generated. In other words, the information processing apparatus can generate a highly accurate first learning model set.

In an embodiment, the generating of the plurality of subsets may include generating another subset by newly sampling the first training data from the training data set after excluding, from the training data set, the first training data sampled into one subset. With this configuration, all of the first training data included in one subset is different from all of the first training data included in another subset. The information processing apparatus can therefore further suppress data bias, such as the bias with conventional undersampling. As a result, since a plurality of first learning models is generated based on the plurality of subsets with further suppressed bias, a reduction in the evaluation index for such a first learning model set is further suppressed.

In an embodiment, the plurality of labels includes two labels, and the plurality of first learning models is used in binary classification. This enables the information processing apparatus to be effectively used in manufacturing industries that use plants or the like. For example, in manufacturing industries that use plants or the like, it is common to have far less abnormal data than normal data. The information processing apparatus can provide effective data analysis that suppresses overtraining even in such conditions.

An information processing apparatus according to an embodiment is disclosed by claim 7.

With this configuration, overtraining can be suppressed and a learning model with a high evaluation index can be generated, even when imbalanced data is used. For example, by dividing the training data set, which represents imbalanced data, into a plurality of subsets, the information processing apparatus can suppress overtraining as illustrated in FIG. 5 below.

By generating a plurality of first learning models based on each subset in a plurality of subsets in which a different combination of first training data is included in each subset, the information processing apparatus can suppress data bias, such as the bias with conventional undersampling. As a result, since a plurality of first learning models is generated based on the plurality of subsets with suppressed bias, a reduction in the evaluation index for such a first learning model set is suppressed.

By generating each subset based on the first training data and the second training data included in the original training data set, the information processing apparatus does not need to use modified data with uncertain accuracy, as in conventional oversampling, in a pseudo manner. As a result, since a plurality of first learning models is generated based on true training data characterized by predetermined labels, a reduction in the evaluation index for such a first learning model set is suppressed.

In addition, the information processing apparatus can store only the first learning model set with high accuracy by storing, in the storage, only the first learning model set for which the value of the first evaluation index is higher than the value of the second evaluation index. By using such a first learning model set, the information processing apparatus can determine, with high accuracy, labels for unknown data for judgment.

A method of generating a learning model according to an embodiment is disclosed by claim 8.

With this configuration, overtraining can be suppressed and a learning model with a high evaluation index can be generated, even when imbalanced data is used. For example, by dividing the training data set, which represents imbalanced data, into a plurality of subsets, an information processing apparatus can suppress overtraining as illustrated in FIG. 5 below.

By generating a plurality of first learning models based on each subset in a plurality of subsets in which a different combination of first training data is included in each subset, the information processing apparatus can suppress data bias, such as the bias with conventional undersampling. As a result, since a plurality of first learning models is generated based on the plurality of sub sets with suppressed bias, a reduction in the evaluation index for such a first learning model set is suppressed.

By generating each subset based on the first training data and the second training data included in the original training data set, the information processing apparatus does not need to use modified data with uncertain accuracy, as in conventional oversampling, in a pseudo manner. As a result, since a plurality of first learning models is generated based on true training data characterized by predetermined labels, a reduction in the evaluation index for such a first learning model set is suppressed.

In addition, the information processing apparatus can store only the first learning model set with high accuracy by storing, in the storage, only the first learning model set for which the value of the first evaluation index is higher than the value of the second evaluation index. By using such a first learning model set, the information processing apparatus can determine, with high accuracy, labels for unknown data for judgment.

According to the present disclosure, a non-transitory computer readable medium, an information processing apparatus, and a method of generating a learning model capable of suppressing overtraining and of generating a learning model with a high evaluation index, even when imbalanced data is used, can be provided.

### BRIEF DESCRIPTION OF THE DRAWINGS

In the accompanying drawings:
FIG. 1 is a functional block diagram illustrating an example configuration of an information processing apparatus according to an embodiment;
FIG. 2 is a flowchart illustrating a first example of operations of the information processing apparatus in FIG. 1;
FIG. 3 is a flowchart illustrating a second example of operations of the information processing apparatus in FIG. 1;
FIG. 4 is a conceptual diagram illustrating the content of the processes executed by the division unit of FIG. 1;
FIG. 5 is a conceptual diagram illustrating a first example of the content of the processes executed by the evaluation unit of FIG. 1; and
FIG. 6 is a conceptual diagram illustrating a second example of the content of the processes executed by the evaluation unit of FIG. 1.

### DETAILED DESCRIPTION

The background and problems with known technology are described in greater detail.

With respect to the classification problem of classifying data by machine learning using supervised data, the training data used for training preferably includes approximately the same number of pieces of data for each characterizing label. However, in the case of device failure detection or the like, a plurality of pieces of data characterized by two labels, normal and abnormal, are collected and analyzed, but the amount of abnormal data is usually much smaller than the amount of normal data.

For example, plants, equipment and the like tend to operate normally most of the time, with sudden failures or failures due to aging occurring only once every few months or years. As another example, the amount of abnormal data is also usually very small compared to the amount of normal data in the manufacture of any given product, in which only one defective product might be discovered among every 10,000 normal products. Even when the ratio of abnormal data to normal data is very small as described above, i.e., when imbalanced data is used, it is required to generate a learning model for making a determination of normal or abnormal using any machine learning algorithm.

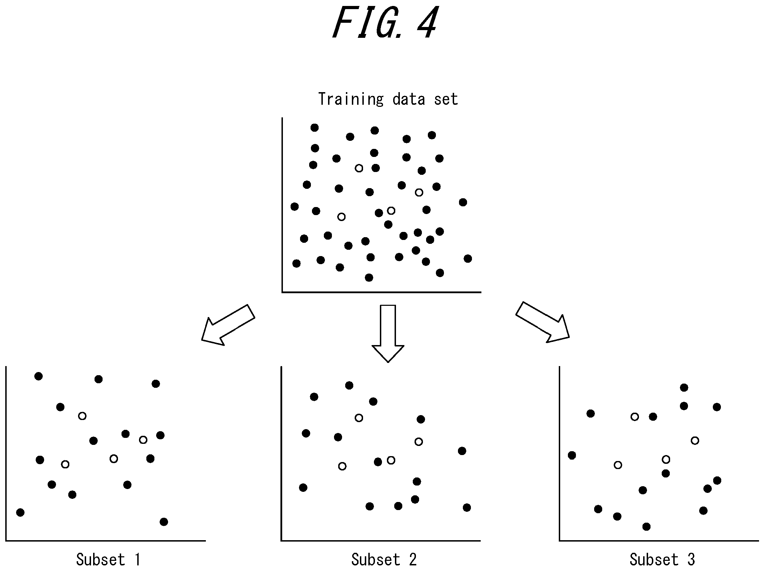

For example, consider the diagram illustrated in the upper portion of FIG. 4, described below, in which data is plotted in two dimensions using two features such as normal and abnormal. Consider also the case of imbalanced data, in which the amount of abnormal data is extremely small relative to normal data. In this case, if a machine learning classification algorithm is used to classify unknown data as normal or abnormal, a boundary between normal and abnormal will be drawn as illustrated in the upper portion of FIG. 5, described below.

Due to the large number of black points indicating normal data surrounding white points indicating abnormal data, only the area very close to the white points is included in the abnormal determination area. Such a state is referred to as overtraining. In reality, as illustrated in the framed graphic in FIG. 5, the area between the white points might also be included in the abnormal determination area. However, overtraining easily occurs with the above-described imbalanced data, and it is difficult to generate a learning model that indicates a boundary including a wide abnormal determination area, as illustrated by the framed graphic in FIG. 5.

To avoid the above-described overtraining, preprocessing known as undersampling or oversampling is conventionally implemented. Undersampling, for example, involves sampling a portion of the majority data to match the number of samples from the majority data to the minority data. Oversampling, for example, involves generating slightly modified data based on the minority data and matching the number of samples from the minority data to the majority data.

However, since undersampling involves sampling from a large amount of normal data to eliminate the imbalance in the number of samples, bias may occur in the data depending on the sampling method. A learning model is thereby generated based on such biased data, and the evaluation index of the learning model may become low. Oversampling solves the imbalance in the number of samples by creating data with slightly modified values from a small amount of abnormal data and adding the created data as abnormal data. However, since it is unclear whether the data whose values are modified from the abnormal data is truly abnormal data, the evaluation index for the generated learning model could similarly be low.

A program, an information processing apparatus, and a method of generating a learning model that can solve these problems are described below. Embodiments of the present disclosure are described with reference to the drawings.

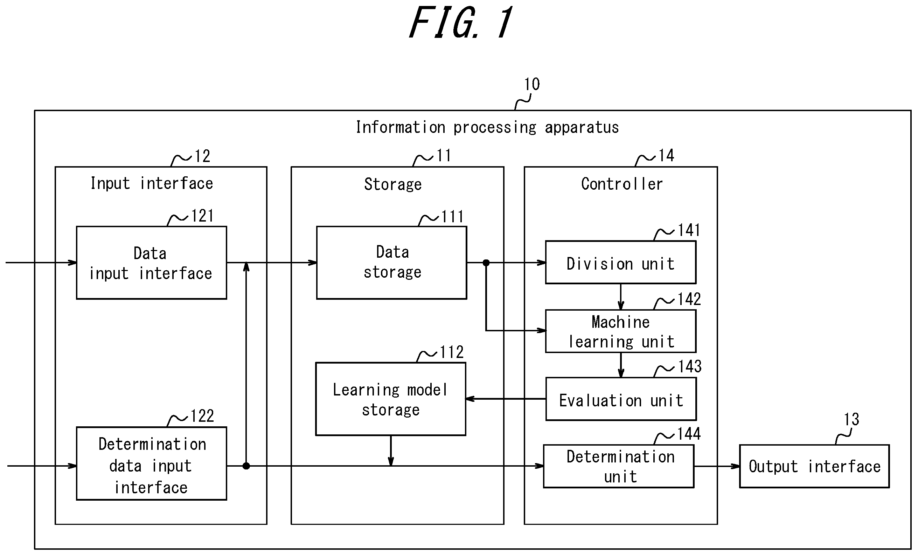

FIG. 1 is a functional block diagram illustrating an example configuration of an information processing apparatus 10 according to an embodiment. The configuration of the information processing apparatus 10 according to an embodiment is mainly described with reference to FIG. 1.

The information processing apparatus 10 includes any general purpose electronic device such as a personal computer (PC), smartphone, tablet PC, or other edge devices. These examples are not limiting, and the information processing apparatus 10 may be a server apparatus, or a plurality of server apparatuses capable of communicating with each other, included in a cloud system, or may be any other dedicated electronic device specialized for the generation of learning models described below. The information processing apparatus 10 may be any apparatus included in a recording system for equipment data, such as a plant information (PI) system and recorder. The information processing apparatus 10 generates a learning model for classifying data by characterizing the data with one label among a plurality of labels.

As major constituent elements, the information processing apparatus 10 includes a storage 11, an input interface 12, an output interface 13, and a controller 14. The storage 11 includes a data storage 111 and a learning model storage 112. The input interface 12 includes a data input interface 121 and a determination data input interface 122. The controller 14 includes a division unit 141, a machine learning unit 142, an evaluation unit 143, and a determination unit 144.

The storage 11 includes any storage module, such as a hard disk drive (HDD), a solid state drive (SSD), an electrically erasable programmable read-only memory (EEPROM), a read-only memory (ROM), and a random access memory (RAM). The storage 11 stores information necessary to realize the operations of the information processing apparatus 10. For example, the storage 11 stores firmware necessary to realize the operations of the information processing apparatus 10. The storage 11 may function as a main storage apparatus, an auxiliary storage apparatus, or a cache memory. The storage 11 is not limited to being internal to the information processing apparatus 10 and may include an external storage module connected through a digital input/output port or the like, such as universal serial bus (USB).

The input interface 12 includes any appropriate input interface that receives an input operation by the user of the information processing apparatus 10 and acquires input information based on the user operation. The input interface 12 may, for example, include physical keys, capacitive keys, a touchscreen provided integrally with a liquid crystal display (LCD) monitor, or a microphone that accepts audio input. The input interface 12 outputs the acquired input information to the controller 14 via the storage 11, or without passing through the storage 11.

The output interface 13 includes any appropriate output interface that outputs information to the user of the information processing apparatus 10. The output interface 13 may, for example, include any appropriate output interface that affects the user's vision and/or hearing. The output interface 13 may, for example, include any appropriate image output interface that primarily affects the user's vision. For example, the output interface 13 may include an LCD monitor. The output interface 13 may, for example, include any appropriate audio output interface that primarily affects the user's hearing.

The controller 14 includes one or more processors. More specifically, the controller 14 includes a general purpose processor or a processor dedicated to a specific process. The controller 14 is connected to each component configuring the information processing apparatus 10 and controls and manages the information processing apparatus 10 overall, starting with the components thereof.

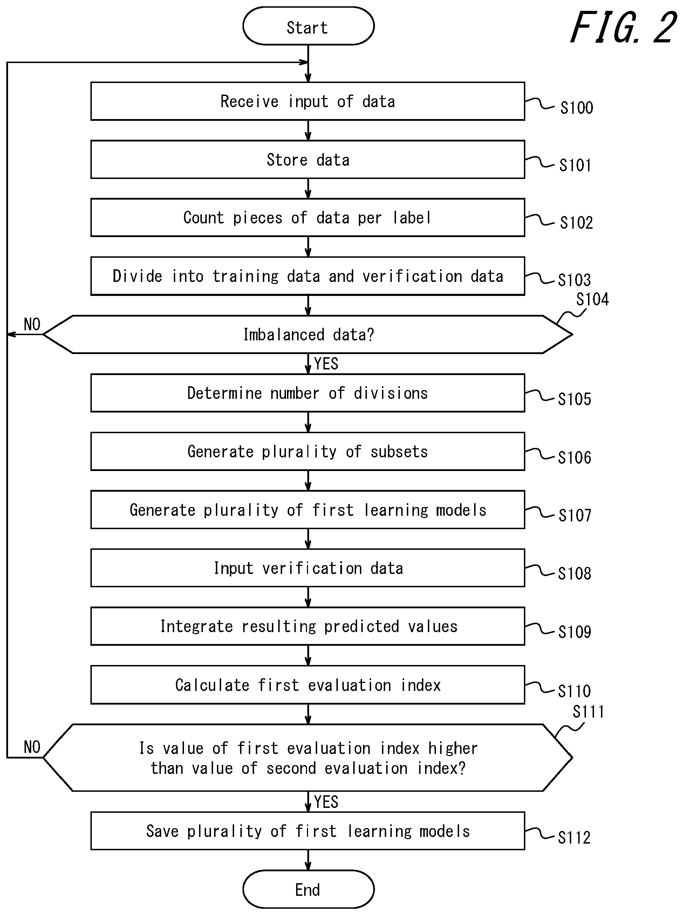

FIG. 2 is a flowchart illustrating a first example of operations of the information processing apparatus 10 in FIG. 1. Referring to FIG. 2, an example of a method of generating a learning model performed by the information processing apparatus 10 is now mainly described.

In step S100, the controller 14 of the information processing apparatus 10 receives, via the data input interface 121, input of data required for generating a learning model. Such data mainly includes measurements and setting information for sensors installed in a plant or equipment, setting information for the equipment, and information stored by software for the equipment. The controller 14 also receives, via the data input interface 121, input of information on labels, such as normal or abnormal, or type A or type B, which are necessary for classifying data by machine learning.

In step S101, the controller 14 stores the data acquired in step S100 in the data storage 111. At this time, in addition to the data acquired in step S100, the controller 14 also stores information in the data storage 111 on the labels that characterize each piece of the data. In other words, the controller 14 stores each piece of data acquired in step S100 in the data storage 111 in association with a label.

In step S102, the division unit 141 of the controller 14 counts the number of pieces of data per label among the data stored in the data storage 111 in step S101.

In step S103, the division unit 141 of the controller 14 divides the data stored in the data storage 111 in step S101 into two parts. In greater detail, the division unit 141 divides the data into two parts: training data, and validation data for evaluating the learning model generated using the training data.

In step S104, the division unit 141 of the controller 14 determines whether the training data set including the plurality of pieces of training data divided in step S103 is imbalanced data. For example, the division unit 141 determines whether the count of the first label and the count of the second label are imbalanced in the training data set. In the present specification, the "first label" includes the label that characterizes the greatest amount of the training data among the plurality of labels. For example, the first label includes the label that characterizes normal data. The "second label" includes the label that characterizes the smallest amount of the training data among the plurality of labels. For example, the second label includes the label that characterizes abnormal data.

For example, the division unit 141 may determine whether the training data set is imbalanced data by determining whether the ratio of the count of the first label to the count of the second label is greater than a first threshold. The first threshold is, for example, 4. This example is not limiting, and the first threshold may be any value greater than 4. For example, the first threshold may be 10 or 100.

Upon determining that the training data set is imbalanced data in step S104, the controller 14 executes the process of step S105. Upon determining that the training data set is not imbalanced data in step S104, the controller 14 executes the process of step S100 again.

In step S105, the division unit 141 of the controller 14 determines the number of divisions when dividing the training data set into a plurality of subsets, described below. For example, the division unit 141 may determine the number of divisions based on information inputted by the user using the input interface 12. This example is not limiting, and the division unit 141 may perform a predetermined calculation based on an initial setting to determine the number of divisions automatically.

For example, the division unit 141 determines the number of divisions so that the ratio of the count of the first label to the count of the second label in one subset is equal to or less than a second threshold. The second threshold is, for example, 1. This example is not limiting, and the second threshold may be any value greater than 1 and less than or equal to 4. For example, the second threshold may be 4.

The division unit 141 calculates the number of divisions n as number of divisions n = count(first label)/(count(second label) × a). For example, the division unit 141 calculates the number of divisions n as an integer value by rounding up any decimal to the next integer. For example, the division unit 141 may set the coefficient a to any value such that 1 ≤ a ≤ 4. For example, the division unit 141 may set the coefficient a based on information inputted by the user using the input interface 12. This example is not limiting, and the division unit 141 may perform a predetermined calculation based on an initial setting to set the coefficient a automatically.

When determining that the count of the first label and the count of the second label are not balanced in step S104, the division unit 141 of the controller 14 divides the training data set into a plurality of subsets to generate a plurality of subsets in step S106. The division unit 141 divides the training data set into a number of subsets equal to the number of divisions determined in step S105.

In the present specification, a "subset" includes, for example, first training data characterized by the first label and having a count balanced with the count of the second label, and all of the second training data characterized by the second label. In this case, a different combination of first training data is included in each subset. For example, the division unit 141 generates another subset by newly sampling the first training data from the training data set after excluding, from the training data set, the first training data sampled into one subset. In other words, all of the first training data included in one subset may be different from all of the first training data included in another subset. Each piece of the first training data included in the training data set may be included in only one subset.

In step S107, the machine learning unit 142 of the controller 14 generates a plurality of first learning models based on each of the subsets generated in step S106. For example, the machine learning unit 142 learns using machine learning on each of n subsets to generate n first learning models.

In step S108, the evaluation unit 143 of the controller 14 inputs the validation data divided in step S103 to each first learning model generated in step S107. For example, the evaluation unit 143 inputs the validation data to each of the n first learning models generated in step S107.

In step S109, the evaluation unit 143 of the controller 14 integrates, by majority vote, the predicted values resulting when the validation data is inputted to each of the first learning models generated in step S107. In greater detail, the evaluation unit 143 of the controller 14 determines a comprehensive predicted value of the validation data by majority vote of the predicted value outputted from each first learning model when the validation data is inputted to each of the first learning models generated in step S107. In other words, the evaluation unit 143 inputs the validation data to each of the n first learning models and predicts whether the validation data is characterized by the first label or the second label by majority vote.

Table 1 below illustrates an example of the content of the processes by the evaluation unit 143 in step S108 and step S109. In Table 1 below, the value 1 corresponds to the first label. The value 2 corresponds to the second label.

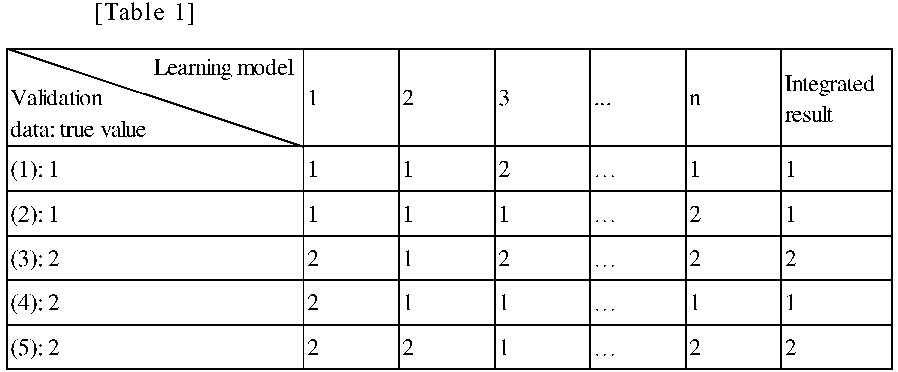

For example, the evaluation unit 143 inputs the validation data (1) with a true value of 1 to each of the n first learning models. The evaluation unit 143 integrates, by majority vote, the predicted values resulting when the validation data (1) is inputted to each of the n first learning models. For example, since there are more first learning models that output a predicted value of 1 than a predicted value of 2, the evaluation unit 143 integrates the predicted values to 1 by majority vote. The evaluation unit 143 performs the same process for the validation data (2), (3), (4), and (5). For example, the evaluation unit 143 may determine the integrated result based on a random number if n is an even number and integration of the predictions by majority vote is not possible.

In step S110, the evaluation unit 143 of the controller 14 calculates the first evaluation index of machine learning for the plurality of first learning models based on the integrated results, acquired in step S109, for the pieces of validation data. In greater detail, the evaluation unit 143 of the controller 14 calculates the first evaluation index while comparing the integrated result for each piece of validation data, as the label characterizing each piece of validation data according to the plurality of first learning models, with the true value for each piece of validation data. In the present specification, the "first evaluation index" includes, for example, AUC (Area Under Curve), correct response rate, F2 score, and the like.

In step S111, the evaluation unit 143 of the controller 14 determines whether the value of the first evaluation index calculated in step S110 is higher than the value of a second evaluation index for a second learning model generated based on the training data set without generation of the plurality of subsets. In other words, the evaluation unit 143 determines whether the value of the first evaluation index is higher than the value of the second evaluation index for the second learning model when the number of divisions is 1. In the present specification, the "second evaluation index" includes, for example, AUC (Area Under Curve), correct response rate, F2 score, and the like.

Upon determining, in step S111, that the value of the first evaluation index is higher than the value of the second evaluation index, the evaluation unit 143 executes the process of step S112. Upon determining, in step S111, that the value of the first evaluation index is equal to or less than the value of the second evaluation index, the evaluation unit 143 executes the process of step S100 again.

After determining, in step S111, that the value of the first evaluation index is higher than the value of the second evaluation index, the evaluation unit 143 stores the plurality of first learning models generated in step S107 in the learning model storage 112 of the storage 11 in step S112.

Referring again to FIG. 1, the determination data input interface 122 of the input interface 12 receives input of data for determination. Such determination data is data such that label that will characterize the data is not known at the time of input via the determination data input interface 122.

The determination unit 144 of the controller 14 newly classifies the determination data, acquired from the determination data input interface 122, by machine learning based on the plurality of first learning models stored in the learning model storage 112 in step S112 of FIG. 2. In other words, the determination unit 144 characterizes the determination data acquired from the determination data input interface 122 with predetermined labels by machine learning based on the plurality of first learning models. For example, the determination unit 144 classifies the determination data into normal or abnormal by machine learning. For example, the determination unit 144 classifies the determination data into type A or type B by machine learning.

For example, in the case of using the plurality of first learning models stored in the learning model storage 112 in an online system, the determination unit 144 may newly classify the determination data by machine learning by executing the same processes as in step S108 and step S109 of FIG. 1. At this time, instead of the validation data in step S108, determination data that has an unknown label and is to be predicted is inputted using the determination data input interface 122.

The output interface 13 outputs the new classification result of the determination data by the determination unit 144 to the user as information. For example, the output interface 13 outputs the result of the classification process by the determination unit 144 to characterize the determination data with predetermined labels to the user as information.

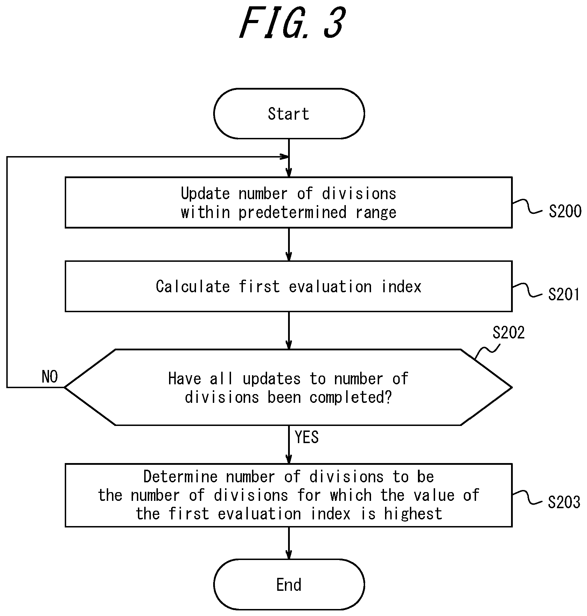

FIG. 3 is a flowchart illustrating a second example of operations of the information processing apparatus 10 in FIG. 1. With reference to FIG. 3, an example of a process for optimizing the number of divisions described above in the method of generating a learning model executed by the information processing apparatus 10 will be mainly described.

In step S200, the division unit 141 of the controller 14 repeatedly updates the number of divisions determined in step S105 of FIG. 2 to a different value within a predetermined range. In the present specification, the "predetermined range" includes, for example, integer values of the number of divisions n that can be taken in the following formula: number of divisions n = count(first label)/(count(second label) × a), where the coefficient a is set to any value such that 1 ≤ a ≤ 4.

In step S201, the controller 14 executes the same processes as in steps S106 through S109 of FIG. 2, based on the number of divisions updated in step S200, and then calculates the first evaluation index in the same way as in step S110.

In step S202, the controller 14 determines whether all of the updates to the number of divisions have been completed. When determining that all of the updates to the number of divisions have been completed, the controller 14 executes the process of step S203. When determining that the updates to the number of divisions have not been completed, the controller 14 executes the process of step S200 again.

After determining, in step S202, that all of the updates to the number of divisions have been completed, the controller 14 determines that the number of divisions is the number of divisions with the highest value among the plurality of first evaluation indices calculated for the numbers of divisions in step S201. Subsequently, the controller 14 executes the same processes as in step S111 and step S112 of FIG. 2, and upon determining that the value of the first evaluation index for the determined number of divisions is higher than the value of the second evaluation index, the controller 14 stores the plurality of first learning models generated by that number of divisions in the learning model storage 112 of the storage 11.

FIG. 4 is a conceptual diagram illustrating the content of the processes executed by the division unit 141 of FIG. 1. With reference to FIG. 4, the process of division into subsets, executed by the division unit 141 of the controller 14 in step S106 of FIG. 2, is described. For example, in the example illustrated in FIG. 4, the number of labels may be only two, i.e., the first label and the second label. In other words, the above-described plurality of first learning models may be used for binary classification.

The training data set illustrated in the upper portion of FIG. 4 includes 42 black points of the first training data characterized by the first label. On the other hand, 4 white points of the second training data characterized by the second label are included.

At this time, the division unit 141 determines that the ratio of the count of the first label to the count of the second label is greater than 4, which is the first threshold, and determines that the training data set is imbalanced data. The division unit 141 determines the number of divisions when dividing the training data set into a plurality of subsets. For example, the division unit 141 sets the coefficient a to 3.5, and calculates the number of divisions to be 3 as follows: number of divisions n = 42/(4 × 3.5).

The division unit 141 divides the training data set into three subsets: subset 1, subset 2, and subset 3. As illustrated in FIG. 4, each of subset 1, subset 2, and subset 3 includes 14 pieces, which is balanced with the count of the second label, of the first training data characterized by the first label, and all 4 pieces of the second training data characterized by the second label. In this case, all of the first training data included in one subset is different from all of the first training data included in another subset. Each piece of the first training data included in the training data set is included in only one subset.

FIG. 5 is a conceptual diagram illustrating a first example of the content of the processes executed by the evaluation unit 143 of FIG. 1. With reference to FIG. 5, the process of calculating predicted values, executed by the evaluation unit 143 of the controller 14 in step S108 of FIG. 2, is described. In greater detail, the process by the evaluation unit 143 to calculate the resulting predicted value when the validation data is inputted to the first learning model generated based on each subset is described.

The machine learning unit 142 of the controller 14 generates three first learning models based respectively on the three subsets, subset 1, subset 2, and subset 3, generated by the division unit 141. The evaluation unit 143 inputs the validation data to each of the three first learning models generated in this way.

For example, if a machine learning classification algorithm is used on a training data set in which two-dimensional data is plotted using two features, such as normal or abnormal, and is then used to classify validation data as normal and abnormal, the boundaries between normal and abnormal are divided among three islands, as illustrated by the dashed lines in the upper graphic of FIG. 5. Due to the large number of black points indicating normal data surrounding white points indicating abnormal data, only the area very close to the white points is included in the abnormal determination area.

On the other hand, when the evaluation unit 143 inputs validation data into the first learning model generated based on subset 1, the boundary line between normal and abnormal illustrated by the dashed dotted line in the graphic at the lower left of FIG. 5, for example, is formed. Because the number of black points surrounding the white points indicating abnormal data has been reduced, a wider abnormal determination area that is not limited to the area very close to the white points, but rather continuously includes adjacent white points, is formed. For subset 2 and subset 3, the respective boundaries are similarly indicated by dashed double dotted lines and dashed triple dotted lines.

FIG. 6 is a conceptual diagram illustrating a second example of the content of the processes executed by the evaluation unit 143 of FIG. 1. With reference to FIG. 6, the process of integrating predicted values, executed by the evaluation unit 143 of the controller 14 in step S109 of FIG. 2, is described. FIG. 6 is a conceptual diagram in which the graphics of the boundaries for each of subset 1, subset 2, and subset 3 illustrated at the bottom of FIG. 5 are superimposed.

For example, the evaluation unit 143 of the controller 14 integrates, by majority vote, the predicted values resulting when the validation data is inputted to each of the three first learning models that were generated. In other words, the evaluation unit 143 determines that an area where two or more abnormal determination areas surrounded by the boundary lines in FIG. 6 overlap is a final abnormal determination area based on a first learning model set that includes the three first learning models.

The area indicated by hatching in FIG. 6 approximates the dashed line area illustrated in the framed graphic in FIG. 5. In other words, the information processing apparatus 10 can generate a first learning model set that forms an abnormal determination area that is more ideal than the abnormal determination area based on the second learning model generated without performing the division process.

The effects of the information processing apparatus 10 according to an embodiment are mainly explained below, but the same explanation applies to a program and a method of generating a learning model according to embodiments.

According to the above embodiment, overtraining can be suppressed and a learning model with a high evaluation index can be generated, even when imbalanced data is used. For example, by dividing the training data set, which represents imbalanced data, into a plurality of subsets, the information processing apparatus 10 can suppress overtraining as illustrated in FIG. 5.

By generating a plurality of first learning models based on each subset in a plurality of subsets in which a different combination of first training data is included in each subset, the information processing apparatus 10 can suppress data bias, such as the bias with conventional undersampling. As a result, since a plurality of first learning models is generated based on the plurality of subsets with suppressed bias, a reduction in the evaluation index for such a first learning model set is suppressed.

By generating each subset based on the first training data and the second training data included in the original training data set, the information processing apparatus 10 does not need to use modified data with uncertain accuracy, as in conventional oversampling, in a pseudo manner. As a result, since a plurality of first learning models is generated based on true training data characterized by predetermined labels, a reduction in the evaluation index for such a first learning model set is suppressed.

In addition, the information processing apparatus 10 can store only the first learning model set with high accuracy by storing, in the storage 11, only the first learning model set for which the value of the first evaluation index is higher than the value of the second evaluation index. By using such a first learning model set, the information processing apparatus 10 can determine, with high accuracy, labels for unknown data for judgment.

By determining the number of divisions when dividing the training data set into a plurality of subsets, the information processing apparatus 10 can appropriately perform the process of dividing imbalanced data into subsets based on the determined number of divisions. By determining the number of divisions, the information processing apparatus 10 can acquire new training data and learn again, even if the degree of imbalance of the imbalanced data changes.

By determining the number of divisions based on information inputted by the user, the information processing apparatus 10 can divide the training data set into a number of subsets desired by the user. The convenience thereby increases for users of the information processing apparatus 10.

By determining the number of divisions automatically based on an initial setting, the information processing apparatus can omit an input operation, by the user, for determining the number of divisions. The convenience thereby increases for users of the information processing apparatus 10.

By repeatedly updating the determined number of divisions to a different value within a predetermined range and determining the number of divisions to be the number of divisions for which the value of the first evaluation index is highest, the information processing apparatus 10 can store only the first learning model set with the highest accuracy among the plurality of first learning model sets that can be generated within a predetermined range. By using such a first learning model set, the information processing apparatus 10 can determine, with high accuracy, labels for unknown data for judgment.

The information processing apparatus 10 integrates, by majority vote, the predicted values resulting when the validation data is inputted to each of the first learning models. As illustrated in FIGS. 5 and 6, this enables the information processing apparatus 10 to form an abnormal determination area that is more ideal than the abnormal determination area based on the second learning model for when the plurality of subsets is not generated. In other words, the information processing apparatus 10 can generate a highly accurate first learning model set.

The information processing apparatus 10 generates another subset by newly sampling the first training data from the training data set after excluding, from the training data set, the first training data sampled into one subset. With this configuration, all of the first training data included in one subset is different from all of the first training data included in another subset. The information processing apparatus 10 can therefore further suppress data bias, such as the bias with conventional undersampling. As a result, since a plurality of first learning models is generated based on the plurality of subsets with further suppressed bias, a reduction in the evaluation index for such a first learning model set is further suppressed.

By the plurality of labels including two labels, and the plurality of first learning models being used in binary classification, the information processing apparatus 10 can be effectively used in, for example, manufacturing industries that use plants or the like. For example, in manufacturing industries that use plants or the like, it is common to have far less abnormal data than normal data. The information processing apparatus 10 can provide effective data analysis that suppresses overtraining even in such conditions.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are considered to be included therein.

For example, the above-described steps in the operations of the information processing apparatus 10 and the functions and the like included in each step may be rearranged in any logically consistent way. The order of steps may be changed, steps may be combined, and individual steps may be divided.

For example, the present disclosure may also be embodied as a program containing a description of the processing for achieving the functions of the above-described information processing apparatus 10 or a storage medium with the program recorded thereon. Such embodiments are also to be understood as falling within the scope of the present disclosure.

In the above embodiment, the information processing apparatus 10 has been described as repeatedly updating the determined number of divisions to a different value within a predetermined range and determining the number of divisions to be the number of divisions for which the value of the first evaluation index is highest, but this example is not limiting. The information processing apparatus 10 need not execute such an optimization process for the determined number of divisions.

In the above embodiment, the information processing apparatus 10 has been described as integrating, by majority vote, the predicted values resulting when the validation data is inputted to each of the first learning models, but this example is not limiting. The information processing apparatus 10 may integrate the resulting predicted values by any appropriate method instead of majority voting.

In the above embodiment, the information processing apparatus 10 has been described as executing the division process so that each piece of the first training data included in the training data set is included in only one subset, but this example is not limiting. The information processing apparatus 10 may execute the division process on the first training data by any method, as long as a different combination of first training data is included in each subset. For example, the information processing apparatus 10 may execute the division process so that a predetermined piece of first training data is included in a plurality of subsets. For example, the information processing apparatus 10 may execute the division process so that a different number of pieces of first training data is included in each subset. For example, the information processing apparatus 10 may execute the division process so that only a portion of the first training data is included in the subsets. In other words, the information processing apparatus 10 may execute the division process so that predetermined first training data is not included in any of the subsets.

In the above embodiment, the subsets have been described as each including first training data characterized by the first label and having a count balanced with the count of the second label, and all of the second training data characterized by the second label, but this example is not limiting. The subsets may each include first training data characterized by the first label and having a count balanced with the count of the second label, and a portion of the second training data characterized by the second label. In this case, the information processing apparatus 10 may execute the division process on the second training data by any appropriate method to include a different combination of second training data in each subset. Conversely, the information processing apparatus 10 may execute the division process on the second training data by any appropriate method for the same combination of second training data to be included in each subset.

The information processing apparatus 10 according to an embodiment may be applicable to any machine learning algorithm. The information processing apparatus 10 may use a combination of a plurality of machine learning algorithms.

## Claims

1. A non-transitory computer readable medium storing a program regarding a learning model for classifying data by characterizing the data with one label among a plurality of labels, the program being executable by one or more processors to cause an information processing apparatus used in manufacturing industries that use plants to execute functions comprising:
inputting a plurality of pieces of training data required for generating the learning model;
determining whether, in a training data set including the plurality of pieces of training data, a count of a first label that characterizes a greatest amount of the training data and a count of a second label that characterizes a smallest amount of the training data are imbalanced;
generating, when it is determined that the count of the first label and the count of the second label are imbalanced, a plurality of subsets each including first training data **characterized by** the first label and at least a portion of second training data **characterized by** the second label, the first training data having a count balanced with the count of the second label, the plurality of subsets being generated by dividing the training data set into the plurality of subsets so that a different combination of the first training data is included in each subset;
**characterized in that**:
generating a plurality of first learning models based on each subset in the generated plurality of subsets;
integrating, by majority vote, predicted values resulting when validation data is inputted to each first learning model;
saving the plurality of first learning models when it is determined that a value of a first evaluation index for the generated plurality of first learning models is higher than a value of a second evaluation index for a second learning model generated based on the training data set without generation of the plurality of subsets;
inputting determination data; and
outputting classification result of the determination data to a user as information, the determination data newly classified by machine learning based on the stored plurality of first learning models, wherein
the plurality of labels comprises two labels; and
the plurality of first learning models is used in binary classification.

2. The non-transitory computer readable medium of claim 1, wherein the functions further comprise determining, before the generating of the plurality of subsets, a number of divisions when dividing the training data set into the plurality of subsets.

3. The non-transitory computer readable medium of claim 2, wherein the determining of the number of divisions comprises determining the number of divisions based on information inputted by a user.

4. The non-transitory computer readable medium of claim 2, wherein the determining of the number of divisions comprises determining the number of divisions automatically based on an initial setting.

5. The non-transitory computer readable medium of any one of claims 2 to 4, wherein the functions further comprise repeatedly updating the determined number of divisions to a different value within a predetermined range, calculating the first evaluation index based on each updated number of divisions, and determining the number of divisions to be the number of divisions for which the value of the first evaluation index is highest.

6. The non-transitory computer readable medium of any one of claims 1 to 5, wherein the generating of the plurality of subsets comprises generating another subset by newly sampling the first training data from the training data set after excluding, from the training data set, the first training data sampled into one subset.

7. An information processing apparatus, used in manufacturing industries that use plants, regarding a learning model for classifying data by characterizing the data with one label among a plurality of labels, the information processing apparatus comprising:
a controller;
a storage;
an input interface; and
an output interface, wherein
the controller is configured to
receive, via the input interface, input of a plurality of pieces of training data required for generating the learning model,
determine whether, in a training data set including the plurality of pieces of training data, a count of a first label that characterizes a greatest amount of the training data and a count of a second label that characterizes a smallest amount of the training data are imbalanced,
generate, when it is determined that the count of the first label and the count of the second label are imbalanced, a plurality of subsets each including first training data **characterized by** the first label and at least a portion of second training data **characterized by** the second label, the first training data having a count balanced with the count of the second label, the plurality of subsets being generated by dividing the training data set into the plurality of subsets so that a different combination of the first training data is included in each subset,
**characterized in that** the controller is configured to
generate a plurality of first learning models based on each subset in the generated plurality of subsets,
integrate, by majority vote, predicted values resulting when validation data is inputted to each first learning model,
store the plurality of first learning models in the storage when it is determined that a value of a first evaluation index for the generated plurality of first learning models is higher than a value of a second evaluation index for a second learning model generated based on the training data set without generation of the plurality of subsets,
receive, via the input interface, input of determination data, and
output, via the output interface, classification result of the determination data to a user as information, the determination data newly classified by machine learning based on the stored plurality of first learning models, wherein
the plurality of labels comprises two labels; and
the plurality of first learning models is used in binary classification.

8. A method, used in manufacturing industries that use plants, regarding a learning model for classifying data by characterizing the data with one label among a plurality of labels, the method comprising:
inputting a plurality of pieces of training data required for generating the learning model;
determining whether, in a training data set including the plurality of pieces of training data, a count of a first label that characterizes a greatest amount of the training data and a count of a second label that characterizes a smallest amount of the training data are imbalanced;
generating, when it is determined that the count of the first label and the count of the second label are imbalanced, a plurality of subsets each including first training data **characterized by** the first label and at least a portion of second training data **characterized by** the second label, the first training data having a count balanced with the count of the second label, the plurality of subsets being generated by dividing the training data set into the plurality of subsets so that a different combination of the first training data is included in each subset;
**characterized in that**:
generating a plurality of first learning models based on each subset in the generated plurality of subsets;
integrating, by majority vote, predicted values resulting when validation data is inputted to each first learning model;
saving the plurality of first learning models when it is determined that a value of a first evaluation index for the generated plurality of first learning models is higher than a value of a second evaluation index for a second learning model generated based on the training data set without generation of the plurality of subsets;
inputting determination data; and
outputting classification result of the determination data to a user as information, the determination data newly classified by machine learning based on the stored plurality of first learning models, wherein
the plurality of labels comprises two labels; and
the plurality of first learning models is used in binary classification.

## Patentansprüche

1. Nichtflüchtiges computerlesbares Medium, das ein Programm speichert, das ein Lernmodell zum Klassifizieren von Daten durch Charakterisieren der Daten mit einem Etikett unter einer Mehrzahl von Etiketten betrifft, wobei das Programm durch einen oder mehrere Prozessoren ausführbar ist, um eine Informationsverarbeitungsvorrichtung zu veranlassen, die in Herstellungsindustrien verwendet wird, die Anlagen verwenden, Funktionen auszuführen, die Folgendes aufweisen:
Eingeben einer Mehrzahl von Elementen von Trainingsdaten, die zum Erzeugen des Lernmodells erforderlich sind;
Bestimmen, ob in einem Trainingsdatensatz, der die Mehrzahl von Elementen von Trainingsdaten enthält, ein Zählwert eines ersten Etiketts, das eine größte Menge der Trainingsdaten charakterisiert, und ein Zählwert eines zweiten Etiketts, das eine kleinste Menge der Trainingsdaten charakterisiert, unausgeglichen sind;
Erzeugen, wenn bestimmt wird, dass der Zählwert des ersten Etiketts und der Zählwert des zweiten Etiketts unausgeglichen sind, einer Mehrzahl von Teilsätzen, die jeweils erste Trainingsdaten, die durch das erste Etikett charakterisiert sind, und zumindest einen Teil von zweiten Trainingsdaten, die durch das zweite Etikett charakterisiert sind, enthalten, wobei die ersten Trainingsdaten einen Zählwert aufweisen, der mit dem Zählwert des zweiten Etiketts ausgeglichen ist, wobei die Mehrzahl von Teilsätzen durch Unterteilen des Trainingsdatensatzes in die Mehrzahl von Teilsätzen erzeugt wird, so dass eine unterschiedliche Kombination der ersten Trainingsdaten in jedem Teilsatz enthalten ist;
**gekennzeichnet durch**:
Erzeugen einer Mehrzahl von ersten Lernmodellen basierend auf jedem Teilsatz in der erzeugten Mehrzahl von Teilsätzen;
Integrieren, **durch** Mehrheitsabstimmung, von vorhergesagten Werten, die resultieren, wenn Validierungsdaten in jedes erste Lernmodell eingegeben werden;
Speichern der Mehrzahl von ersten Lernmodellen, wenn bestimmt wird, dass ein Wert eines ersten Bewertungsindex für die erzeugte Mehrzahl von ersten Lernmodellen höher ist als ein Wert eines zweiten Bewertungsindex für ein zweites Lernmodell, das basierend auf dem Trainingsdatensatz erzeugt wird, ohne Erzeugung der Mehrzahl von Teilsätzen;
Eingeben von Bestimmungsdaten; und
Ausgeben eines Klassifizierungsergebnisses der Bestimmungsdaten an einen Benutzer als Informationen, wobei die Bestimmungsdaten **durch** maschinelles Lernen basierend auf der gespeicherten Mehrzahl von ersten Lernmodellen neu klassifiziert werden, wobei
die Mehrzahl von Etiketten zwei Etiketten aufweist; und
die Mehrzahl von ersten Lernmodellen bei binärer Klassifizierung verwendet wird.

2. Nichtflüchtiges computerlesbares Medium gemäß Anspruch 1, bei dem die Funktionen ferner ein Bestimmen, vor dem Erzeugen der Mehrzahl von Teilsätzen, einer Anzahl von Unterteilungen beim Unterteilen des Trainingsdatensatzes in die Mehrzahl von Teilsätzen aufweisen.

3. Nichtflüchtiges computerlesbares Medium gemäß Anspruch 2, bei dem das Bestimmen der Anzahl von Unterteilungen ein Bestimmen der Anzahl von Unterteilungen basierend auf Informationen aufweist, die durch einen Benutzer eingegeben werden.

4. Nichtflüchtiges computerlesbares Medium gemäß Anspruch 2, bei dem das Bestimmen der Anzahl von Unterteilungen ein automatisches Bestimmen der Anzahl von Unterteilungen basierend auf einer Anfangseinstellung aufweist.

5. Nichtflüchtiges computerlesbares Medium gemäß einem der Ansprüche 2 bis 4, bei dem die Funktionen ferner ein wiederholtes Aktualisieren der bestimmten Anzahl von Unterteilungen auf einen anderen Wert innerhalb eines vorbestimmten Bereichs, ein Berechnen des ersten Bewertungsindex basierend auf jeder aktualisierten Anzahl von Unterteilungen und ein Bestimmen der Anzahl von Unterteilungen als die Anzahl von Unterteilungen, für die der Wert des ersten Bewertungsindex am höchsten ist, aufweisen.

6. Nichtflüchtiges computerlesbares Medium gemäß einem der Ansprüche 1 bis 5, bei dem das Erzeugen der Mehrzahl von Teilsätzen ein Erzeugen eines anderen Teilsatzes durch neues Abtasten der ersten Trainingsdaten aus dem Trainingsdatensatz nach einem Ausschließen der ersten Trainingsdaten, die in einen Teilsatz abgetastet werden, aus dem Trainingsdatensatz, aufweist.

7. Informationsverarbeitungsvorrichtung, die in Herstellungsindustrien verwendet wird, die Anlagen verwenden, in Bezug auf ein Lernmodell zum Klassifizieren von Daten durch Charakterisieren der Daten mit einem Etikett unter einer Mehrzahl von Etiketten, wobei die Informationsverarbeitungsvorrichtung folgende Merkmale aufweist:
eine Steuerung;
einen Speicher;
eine Eingabeschnittstelle; und
eine Ausgabeschnittstelle, wobei
die Steuerung konfiguriert ist zum
Empfangen, über die Eingabeschnittstelle, einer Eingabe einer Mehrzahl von Elementen von Trainingsdaten, die zum Erzeugen des Lernmodells erforderlich sind,
Bestimmen, ob in einem Trainingsdatensatz, der die Mehrzahl von Elementen von Trainingsdaten enthält, ein Zählwert eines ersten Etiketts, das eine größte Menge der Trainingsdaten charakterisiert, und ein Zählwert eines zweiten Etiketts, das eine kleinste Menge der Trainingsdaten charakterisiert, unausgeglichen sind,
Erzeugen, wenn bestimmt wird, dass der Zählwert des ersten Etiketts und der Zählwert des zweiten Etiketts unausgeglichen sind, einer Mehrzahl von Teilsätzen, die jeweils erste Trainingsdaten, die durch das erste Etikett charakterisiert sind, und zumindest einen Teil von zweiten Trainingsdaten, die durch das zweite Etikett charakterisiert sind, enthalten, wobei die ersten Trainingsdaten einen Zählwert aufweisen, der mit dem Zählwert des zweiten Etiketts ausgeglichen ist, wobei die Mehrzahl von Teilsätzen durch Unterteilen des Trainingsdatensatzes in die Mehrzahl von Teilsätzen erzeugt wird, so dass eine unterschiedliche Kombination der ersten Trainingsdaten in jedem Teilsatz enthalten ist,
**dadurch gekennzeichnet, dass** die Steuerung konfiguriert ist zum
Erzeugen einer Mehrzahl von ersten Lernmodellen basierend auf jedem Teilsatz in der erzeugten Mehrzahl von Teilsätzen,
Integrieren, durch Mehrheitsabstimmung, von vorhergesagten Werten, die resultieren, wenn Validierungsdaten in jedes erste Lernmodell eingegeben werden,
Speichern der Mehrzahl von ersten Lernmodellen in dem Speicher, wenn bestimmt wird, dass ein Wert eines ersten Bewertungsindex für die erzeugte Mehrzahl von ersten Lernmodellen höher ist als ein Wert eines zweiten Bewertungsindex für ein zweites Lernmodell, das basierend auf dem Trainingsdatensatz erzeugt wird, ohne Erzeugung der Mehrzahl von Teilsätzen,
Empfangen, über die Eingabeschnittstelle, einer Eingabe von Bestimmungsdaten, und
Ausgeben, über die Ausgabeschnittstelle, eines Klassifizierungsergebnisses der Bestimmungsdaten an einen Benutzer als Informationen, wobei die Bestimmungsdaten durch maschinelles Lernen basierend auf der gespeicherten Mehrzahl von ersten Lernmodellen neu klassifiziert werden, wobei
die Mehrzahl von Etiketten zwei Etiketten aufweist; und
die Mehrzahl von ersten Lernmodellen bei binärer Klassifizierung verwendet wird.

8. Verfahren, das in Herstellungsindustrien verwendet wird, die Anlagen verwenden, in Bezug auf ein Lernmodell zum Klassifizieren von Daten durch Charakterisieren der Daten mit einem Etikett unter einer Mehrzahl von Etiketten, wobei das Verfahren folgende Schritte aufweist:
Eingeben einer Mehrzahl von Elementen von Trainingsdaten, die zum Erzeugen des Lernmodells erforderlich sind;
Bestimmen, ob in einem Trainingsdatensatz, der die Mehrzahl von Elementen von Trainingsdaten enthält, ein Zählwert eines ersten Etiketts, das eine größte Menge der Trainingsdaten charakterisiert, und ein Zählwert eines zweiten Etiketts, das eine kleinste Menge der Trainingsdaten charakterisiert, unausgeglichen sind;
Erzeugen, wenn bestimmt wird, dass der Zählwert des ersten Etiketts und der Zählwert des zweiten Etiketts unausgeglichen sind, einer Mehrzahl von Teilsätzen, die jeweils erste Trainingsdaten, die durch das erste Etikett charakterisiert sind, und zumindest einen Teil von zweiten Trainingsdaten, die durch das zweite Etikett charakterisiert sind, enthalten, wobei die ersten Trainingsdaten einen Zählwert aufweisen, der mit dem Zählwert des zweiten Etiketts ausgeglichen ist, wobei die Mehrzahl von Teilsätzen durch Unterteilen des Trainingsdatensatzes in die Mehrzahl von Teilsätzen erzeugt wird, so dass eine unterschiedliche Kombination der ersten Trainingsdaten in jedem Teilsatz enthalten ist;
**gekennzeichnet durch**:
Erzeugen einer Mehrzahl von ersten Lernmodellen basierend auf jedem Teilsatz in der erzeugten Mehrzahl von Teilsätzen;
Integrieren, **durch** Mehrheitsabstimmung, von vorhergesagten Werten, die resultieren, wenn Validierungsdaten in jedes erste Lernmodell eingegeben werden;
Speichern der Mehrzahl von ersten Lernmodellen, wenn bestimmt wird, dass ein Wert eines ersten Bewertungsindex für die erzeugte Mehrzahl von ersten Lernmodellen höher ist als ein Wert eines zweiten Bewertungsindex für ein zweites Lernmodell, das basierend auf dem Trainingsdatensatz erzeugt wird, ohne Erzeugung der Mehrzahl von Teilsätzen;
Eingeben von Bestimmungsdaten; und
Ausgeben eines Klassifizierungsergebnisses der Bestimmungsdaten an einen Benutzer als Informationen, wobei die Bestimmungsdaten **durch** maschinelles Lernen basierend auf der gespeicherten Mehrzahl von ersten Lernmodellen neu klassifiziert werden, wobei
die Mehrzahl von Etiketten zwei Etiketten aufweist; und
die Mehrzahl von ersten Lernmodellen bei binärer Klassifizierung verwendet wird.

## Revendications

1. Support informatique non transitoire lisible par ordinateur stockant un programme relatif à un modèle d'apprentissage pour classer des données en les caractérisant à l'aide d'une étiquette parmi une pluralité d'étiquettes, le programme pouvant être exécuté par un ou plusieurs processeurs afin d'amener un appareil de traitement d'informations utilisé dans les industries manufacturières qui utilisent des plantes, à exécuter des fonctions comprenant :
saisir une pluralité de pièces de données d'apprentissage nécessaires à la génération du modèle d'apprentissage ;
déterminer si, dans un ensemble de données d'apprentissage comprenant la pluralité de pièces de données d'apprentissage, un nombre d'une première étiquette qui caractérise une plus grande quantité de données d'apprentissage et un nombre d'une deuxième étiquette qui caractérise une plus petite quantité de données d'apprentissage sont déséquilibrés ;
générer, lorsqu'il est déterminé que le nombre de la première étiquette et le nombre de la deuxième étiquette sont déséquilibrés, une pluralité de sous-ensembles comprenant chacun des premières données d'apprentissage **caractérisées par** la première étiquette et au moins une partie des deuxièmes données d'apprentissage **caractérisées par** la deuxième étiquette, les premières données d'apprentissage ayant un nombre équilibré avec le nombre de la deuxième étiquette, la pluralité de sous-ensembles étant générée en divisant l'ensemble de données d'apprentissage en la pluralité de sous-ensembles de sorte qu'une combinaison différente des premières données d'apprentissage soit incluse dans chaque sous-ensemble ;
**caractérisé par** :
générer une pluralité de premiers modèles d'apprentissage sur la base de chaque sous-ensemble de la pluralité de sous-ensembles générée ;
intégrer, par vote majoritaire, des valeurs prédites obtenues lorsque les données de validation sont saisies dans chaque premier modèle d'apprentissage ;
enregistrer la pluralité de premiers modèles d'apprentissage lorsqu'il est déterminé qu'une valeur d'un premier indice d'évaluation pour la pluralité générée de premiers modèles d'apprentissage est supérieure à une valeur d'un deuxième indice d'évaluation pour un deuxième modèle d'apprentissage généré sur la base de l'ensemble de données d'apprentissage sans génération de la pluralité de sous-ensembles ;
saisir des données de détermination ; et
transmettre à un utilisateur, sous forme d'informations, du résultat de la classification des données de détermination, les données de détermination étant nouvellement classifiées par apprentissage automatique sur la base de la pluralité de premiers modèles d'apprentissage enregistrés, dans lequel
la pluralité d'étiquettes comprend deux étiquettes ; et
la pluralité des premiers modèles d'apprentissage est utilisée dans la classification binaire.

2. Support informatique non transitoire lisible par ordinateur selon la revendication 1, dans lequel les fonctions comprennent en outre la détermination, avant la génération de la pluralité de sous-ensembles, d'un nombre de divisions lors de la division de l'ensemble de données d'apprentissage en la pluralité de sous-ensembles.

3. Support informatique non transitoire lisible par ordinateur selon la revendication 2, dans lequel la détermination du nombre de divisions comprend la détermination du nombre de divisions sur la base d'informations saisies par un utilisateur.

4. Support informatique non transitoire lisible par ordinateur selon la revendication 2, dans lequel la détermination du nombre de divisions comprend la détermination automatique du nombre de divisions sur la base d'un réglage initial.

5. Support informatique non transitoire lisible par ordinateur selon l'une quelconque des revendications 2 à 4, dans lequel les fonctions comprennent en outre la mise à jour répétée du nombre de divisions déterminé à une valeur différente dans une plage prédéterminée, le calcul du premier indice d'évaluation sur la base de chaque nombre de divisions mis à jour, et la détermination du nombre de divisions comme étant le nombre de divisions pour lequel la valeur du premier indice d'évaluation est la plus élevée.

6. Support informatique non transitoire lisible par ordinateur selon l'une quelconque des revendications 1 à 5, dans lequel la génération de la pluralité de sous-ensembles comprend la génération d'un autre sous-ensemble en échantillonnant à nouveau les premières données d'apprentissage à partir de l'ensemble de données d'apprentissage après exclusion, de l'ensemble de données d'apprentissage, les premières données d'apprentissage échantillonnées dans un sous-ensemble.

7. Appareil de traitement d'informations, utilisé dans les industries manufacturières qui utilisent des plantes, concernant un modèle d'apprentissage pour classer des données en caractérisant les données avec une étiquette parmi une pluralité d'étiquettes, l'appareil de traitement d'informations comprenant :
un contrôleur ;
un stockage ;
une interface de saisie ; et
une interface de sortie, dans laquelle
le contrôleur est configuré pour
recevoir, via l'interface de saisie, la saisie d'une pluralité de données d'apprentissage nécessaires à la génération du modèle d'apprentissage,
déterminer si, dans un ensemble de données d'apprentissage comprenant la pluralité de pièces de données d'apprentissage, un nombre d'une première étiquette qui caractérise une plus grande quantité des données d'apprentissage et un nombre d'une deuxième étiquette qui caractérise une plus petite quantité des données d'apprentissage sont déséquilibrés,
générer, lorsqu'il est déterminé que le nombre de la première étiquette et le nombre de la deuxième étiquette sont déséquilibrés, une pluralité de sous-ensembles comprenant chacun des premières données d'apprentissage **caractérisées par** la première étiquette et au moins une partie des deuxièmes données d'apprentissage **caractérisées par** la deuxième étiquette, les premières données d'apprentissage ayant un nombre équilibré avec le nombre de la deuxième étiquette, la pluralité de sous-ensembles étant générée en divisant l'ensemble de données d'apprentissage en la pluralité de sous-ensembles de sorte qu'une combinaison différente des premières données d'apprentissage soit incluse dans chaque sous-ensemble ;
**caractérisé en ce que** le contrôleur est configuré pour
générer une pluralité de premiers modèles d'apprentissage sur la base de chaque sous-ensemble de la pluralité de sous-ensembles générée,
intégrer, par vote majoritaire, les valeurs prédites obtenues lorsque les données de validation sont saisies dans chaque premier modèle d'apprentissage,
enregistrer la pluralité de premiers modèles d'apprentissage lorsqu'il est déterminé qu'une valeur d'un premier indice d'évaluation pour la pluralité générée de premiers modèles d'apprentissage est supérieure à une valeur d'un deuxième indice d'évaluation pour un deuxième modèle d'apprentissage généré sur la base de l'ensemble de données d'apprentissage sans génération de la pluralité de sous-ensembles,
recevoir, via l'interface de saisie, la saisie des données de détermination, et
transmettre, via l'interface de sortie, le résultat de la classification des données de détermination à un utilisateur sous forme d'informations, les données de détermination étant nouvellement classifiées par apprentissage automatique sur la base de la pluralité de premiers modèles d'apprentissage enregistrés, dans lequel
la pluralité d'étiquettes comprend deux étiquettes ; et
la pluralité des premiers modèles d'apprentissage est utilisée dans la classification binaire.

8. Procédé utilisé dans les industries manufacturières qui utilisent des plantes, concernant un modèle d'apprentissage pour classer des données en les caractérisant à l'aide d'une étiquette parmi une pluralité d'étiquettes, le procédé comprenant :
saisir une pluralité de pièces de données d'apprentissage nécessaires à la génération du modèle d'apprentissage ;
déterminer si, dans un ensemble de données d'apprentissage comprenant la pluralité de pièces de données d'apprentissage, un nombre d'une première étiquette qui caractérise une plus grande quantité de données d'apprentissage et un nombre d'une deuxième étiquette qui caractérise une plus petite quantité de données d'apprentissage sont déséquilibrés ;
générer, lorsqu'il est déterminé que le nombre de la première étiquette et le nombre de la deuxième étiquette sont déséquilibrés, une pluralité de sous-ensembles comprenant chacun des premières données d'apprentissage **caractérisées par** la première étiquette et au moins une partie des deuxièmes données d'apprentissage **caractérisées par** la deuxième étiquette, les premières données d'apprentissage ayant un nombre équilibré avec le nombre de la deuxième étiquette, la pluralité de sous-ensembles étant générée en divisant l'ensemble de données d'apprentissage en la pluralité de sous-ensembles de sorte qu'une combinaison différente des premières données d'apprentissage soit incluse dans chaque sous-ensemble ;
**caractérisé par** :
générer une pluralité de premiers modèles d'apprentissage sur la base de chaque sous-ensemble de la pluralité de sous-ensembles générée ;
intégrer, par vote majoritaire, des valeurs prédites obtenues lorsque les données de validation sont saisies dans chaque premier modèle d'apprentissage ;
enregistrer la pluralité de premiers modèles d'apprentissage lorsqu'il est déterminé qu'une valeur d'un premier indice d'évaluation pour la pluralité générée de premiers modèles d'apprentissage est supérieure à une valeur d'un deuxième indice d'évaluation pour un deuxième modèle d'apprentissage généré sur la base de l'ensemble de données d'apprentissage sans génération de la pluralité de sous-ensembles ;
saisir des données de détermination ; et
transmettre à un utilisateur, sous forme d'informations, du résultat de la classification des données de détermination, les données de détermination étant nouvellement classifiées par apprentissage automatique sur la base de la pluralité de premiers modèles d'apprentissage enregistrés, dans lequel
la pluralité d'étiquettes comprend deux étiquettes ; et
la pluralité des premiers modèles d'apprentissage est utilisée dans la classification binaire.
